# EUROPEAN PATENT SPECIFICATION

(11) **EP 2 166 783 B1**
(45) Date of publication and mention of the grant of the patent: **30.03.2016**
(21) Application number: 08842784.4
(22) Date of filing: 10.10.2008
(51) Int. Cl.: H04W 36/00, H04W 36/02

(54) **A SWITCHING VALIDATE MESSAGE PROCESSING METHOD**
EIN VERFAHREN ZUR VERARBEITUNG VON SCHALTUNGSBESTÄTIGUNGSNACHRICHTEN
PROCEDE DE TRAITEMENT DE MESSAGE DE VALIDATION DE COMMUTATION

(30) Priority: 15.10.2007 CN 200710180320
(43) Date of publication of application: 24.03.2010
(73) Proprietor: ZTE Corporation, Shenzhen City, Guangdong Province 518057 (CN)
(72) Inventor: SONG, Jianquan, Guangdong 518057 (CN); XU, Ling, Guangdong 518057 (CN); CHU, Li, Guangdong 518057 (CN)
(74) Representative: Bittner, Bernhard
(86) International application number: PCT/CN2008/072658
(87) International publication number: WO 2009/052731

(56) References cited:
- EP-A2- 0 881 852
- CN-A- 1 476 256
- CN-A- 101 043 720
- US-A1- 2005 096 051
- US-A1- 2005 250 498
- US-A1- 2006 111 111
- SUNGJIN LEE ET AL: "IEEE 802.16e HO options for forcing and suggesting HO", IEEE C802.16E-03/48, XX, XX, 4 September 2003 (2003-09-04), page complete, XP002333440,

## Description

### TECHNICAL FIELD

The present invention relates to the field of communications, and relates more particularly to a method for processing handoff confirm messages.

### BACKGROUD

US2005/0250498A1 discloses a broadband wireless access (BWA) communication system, which includes a mobile subscriber station (MSS), a serving base station (BS) with which the MSS performs communication, and a plurality of neighbor BSs. The serving BS transmits, to the MSS, a handover request message including information on at least one recommended BS to which the MSS can perform a handover, among the neighbor BSs, and indication information indicating a fast handover, and transmits, to each of the recommended BSs, a handover confirm message indicating that the MSS will perform the fast handover.

US2005/0096051 discloses is a method for enabling a mobile station existing in a serving cell area to perform a handover procedure in a broadband mobile communication system including the mobile station, a serving base station providing a service to the mobile station, and one or more target base stations containing at least one target cell area overlapping with the serving cell area occupied by the serving base station. The method includes transmitting a handover request message from the mobile station to the serving base station when it is detected that a performance of a handover is necessary; and transmitting a handover indication message containing handover cancel information to the serving base station when the mobile station determines a cancel of the handover while the mobile station is being handed over to one or more target base stations by the serving base station.

XP-002333440 provides an option of forcing handoff or suggesting handoff, and option for the MSS to reject a suggestion.

In wireless communication systems, different control entities are required to transmit control information to each other so as to coordinately accomplish a certain function. As the control entity within the network is responsible for more and more functions and has larger and larger user capacity, the load of the control information that needs to be transmitted is becoming higher and higher. How to improve the efficiency of information transmission on the link becomes an urgent problem to be solved. Meanwhile, as more and more control information contents being transmitted, how to effectively improve the processing efficiency of a receiving end becomes a problem that must be solved.

Generally, a method for solving a problem of transmission efficiency can be considered from the perspective of information transmission, for example, how to unpack/pack to guarantee the most efficient transmission. Moreover, a method for improving the processing efficiency of the receiving end can be also considered from the perspective of information transmission. However, in practice, some control flows have the following features:
In wireless communication systems, many identical message names can be used in different situations, taking an HO_Cnf (Handoff Confirm) message in handoff action phase of IEEE802.16 system for example, the message can be used in four situations: Confirm, Unconfirm, Cancel, and Reject, which are indicated respectively by the field of an HO confirm type in the message. After receiving the message, the receiving end accordingly takes the next step by analyzing the content of the field.

At present, this kind of message also includes some indispensable fields related to a service flow (SF), such as a service flow identifier, a service flow direction, a classifier regulation index (whether it is indispensable or not is depend on a tunnel granularity of R4, R6, or R8), a classifier regulation priority (whether it is indispensable or not is depend on tunnel granularity of R4, R6, or R8), and QoS (Quality of Service) parameters. These fields are used to assist the receiving end to acquire corresponding information when the handoff succeeds, so as to take the next step.

In general, the handoff is divided into two phases, namely a handoff preparation phase and a handoff action phase.

During the handoff preparation phase, a data path pre-registration procedure can be implemented, or the pre-registration procedure can be deferred to be implemented during the handoff action phase; if the data path pre-registration procedure is to be implemented during the handoff preparation phase, it is necessary in relevant messages to include relevant information of all service flows of the terminal. The relevant messages include a handoff request message, a handoff response message or a data path pre-registration request message, and a data path pre-registration response message. One terminal may have multiple service flows; under the NWG1.1.1 specification, the relation between the service flow and the data path is one-to-one. Under this case, the data path information is included in the service flow information.

During the handoff action phase, according to the content of a MOB_HO_IND (Mobile Handoff Indication) message received from the terminal through an air interface, a serving base station determines the value of the HO confirm type in the HO_Cnf that is to be sent.
(1) If the MOB_HO_IND message sent by the terminal indicates that the mobile station (MS) has selected one target base station, then the HO confirm type in the HO_Cnf message that is sent to the selected target base station (or the selected target access service network, ASN) by the serving base station is set as "Confirm". Meanwhile, the HO confirm type in the HO_Cnf message that is sent to the unselected target base station (or the unselected target ASN) by the serving base station is set as "Cancel".
(2) If the MOB_HO_IND message indicates that the MS cancels the handoff, then the HO confirm types in the HO_Cnf messages which are sent to all target base stations (or target ASNs) by the serving base station (or the service ASN) are set as "Cancel".
(3) If the MOB_HO_IND message indicates that MS rejects the handoff, then the HO confirm types in the HO_Cnf messages which are sent to all target base stations (or target ASNs) by the serving base station (or the service ASN) are set as "Reject".
(4) If the MOB_HO_IND message is not received, then the HO confirm types in the HO_Cnf messages which are sent to all target serving base stations (or target ASNs) by the serving base station (or the service ASN) are set as "Unconfirm".

According to the protocol handoff procedure, only when the HO confirm type in the HO_Cnf message that is sent to the target base station by the serving base station is set as "Confirm" or "Unconfirm", it is possible for the terminal to successfully access one target base station, therefore the relevant fields of all service flows of the terminal need to be included in the HO-Cnf message.

According to the protocol handoff procedure, when the HO confirm type in the HO_Cnf message that is sent to the target base station by the serving base station is set as "Cancel" or "Reject", there are two situations as following:
(1) If the data path pre-registration procedure is not implemented during the handoff preparation phase, then it means that there is no resource to be released. Accordingly, there is no need to include the relevant fields of the service flows of the terminal in the HO-Cnf message.
(2) If the data path pre-registration procedure has been implemented during the handoff preparation phase, then it is required to release the resources allocated to the service flows of the terminal during the data path pre-registration procedure; the service flows contained in the terminal during the data path pre-registration procedure are known, if the relevant messages of the data path pre-registration procedure have indicated the terminal and inclusive service flows in the terminal, then the HO-Cnf message is just required to include a terminal identifier, at this moment, after receiving the message, the target base station then releases resources of the service flows related to the terminal identifier, thus the relevant fields of the service flows of the terminal are not required to be included in the HO-Cnf message.

However, in the current protocol message procedure, for the unselected target base stations or the target base stations which are under the situation that the whole handoff is canceled or rejected, the serving base station still make the HO-Cnf message include the relevant fields of all service flows of the terminal, thereby generating a lot of unnecessary overhead; moreover, the receiving end is also required to parse all information contents in the message, and then makes corresponding processing. Supposing that three target base stations are selected and two service flows are contained in the terminal, for every handoff, if the handoff is successful, it is necessary to send handoff cancellation notices to two of the target base stations, and according to the current protocol, the message is required to include 9xN invalid fields, wherein N is the number of the service flows. In regions with more frequent handoff, such a design brings a lot of redundant and useless information to network links. Moreover, a lot of useless parsing work also needs to be done in the receiving end.

### SUMMARY

In view of the above descriptions, intending to solve the problem of huge unnecessary expense caused by the fact that HO-Cnf messages in the above four handoff processes are all required to include relevant fields of all service flows of the terminal, the present invention provides a method for processing handoff confirm messages, according to different situations, making the message procedures adjust accordingly, and also making the included message contents adapt accordingly. Thus the efficiency of the message transmission on the network side is improved. Moreover, the contents that need to be processed by the receiving end are also processed in different ways according to the different procedures, and the processing efficiency is improved.

A method for processing handoff confirm messages according to one aspect of the present invention comprises the following steps: receiving, by a serving base station, a handoff indication message from a terminal and, and determining, by the serving base station according to the handoff indication message, the content of the field of an HO confirm type in the handoff confirm message which is to be sent; and determining, by the serving base station according to the content of the field of the HO confirm type, whether to include service flow information in the handoff confirm messages or not when sending them to multiple target base stations or target access service networks, wherein when the content of the field of the HO confirm type indicates the handover is cancelled or rejected, the service flow information is not included in the handoff confirm message, and a terminal identifier is included in the handoff confirm message.

This invention also provides an information transmission method based on the above method for processing handoff confirm messages. The method comprises the following process: after receiving the handoff confirm message, the target base station or target ASN performs corresponding operations according to the handoff confirm message.

According to the method for processing handoff confirm messages of the present invention, in the same control procedure, redundant information to be included is greatly reduced by handoff among different branches according to different message contents, and the transmission efficiency of link control information and the processing efficiency of the receiving end are improved effectively.

### BRIEF DESCRIPTION OF THE DRAWINGS

Fig. 1 is a flow chart illustrating the method for processing the handoff confirm message according to an embodiment of the present invention;
Fig. 2 is a flow chart illustrating the method for processing the handoff confirm message according to a preferred embodiment of the present invention, under the condition that the handoff indication message from a mobile phone indicates that a target base station TBS 1 is selected;
Fig. 3 is a flow chart illustrating the method for processing the handoff confirm message according to a preferred embodiment of the present invention, under the condition that the handoff indication message from a mobile phone indicates that the MS cancels the handoff;
Fig. 4 is a flow chart illustrating the method for processing the handoff confirm message according to a preferred embodiment of the present invention, under the condition that the handoff indication message from a mobile phone indicates that the MS rejects the handoff;
Fig. 5 is a flow chart illustrating the method for processing the handoff confirm message according to a preferred embodiment of the present invention, under the condition that the handoff indication message from a mobile phone is lost;
Fig. 6 is a flow chart illustrating the method for processing the handoff confirm message according to another preferred embodiment of the present invention, under the condition that the handoff indication message from a mobile phone indicates that a target base station TBS 1 is selected;
Fig. 7 is a flow chart illustrating the method for processing the handoff confirm message according to another preferred embodiment of the present invention, under the condition that the handoff indication message from a mobile phone indicates that the MS cancels the handoff;
Fig. 8 is a flow chart illustrating the method for processing the handoff confirm message according to another preferred embodiment of the present invention, under the condition that the handoff indication message from a mobile phone indicates that the MS rejects the handoff; and
Fig. 9 is a flow chart illustrating the method for processing the handoff confirm message according to another preferred embodiment of the present invention, under the condition that the handoff indication message from a mobile phone is lost.

### DETAILED DESCRIPTION

### Function summary

As in current technology, HO-Cnf messages sent by a serving base station are required to include relevant fields of all service flows of a terminal, and for this reason, the tremendous redundant and useless information is brought into network links, thus leading to huge amount of unnecessary expense. To solve this problem, the present invention provides a method for processing the handoff confirm messages: according to different situations, message flows make different adjustments, and message contents being included also make different adoptions accordingly. As a result, the efficiency of the message transmission in the network is improved. Meanwhile, the contents that need to be processed by a receiving end are also processed in different ways according to different flows, thus the processing efficiency is improved.

Embodiments of the present invention will be described in detail hereinafter.

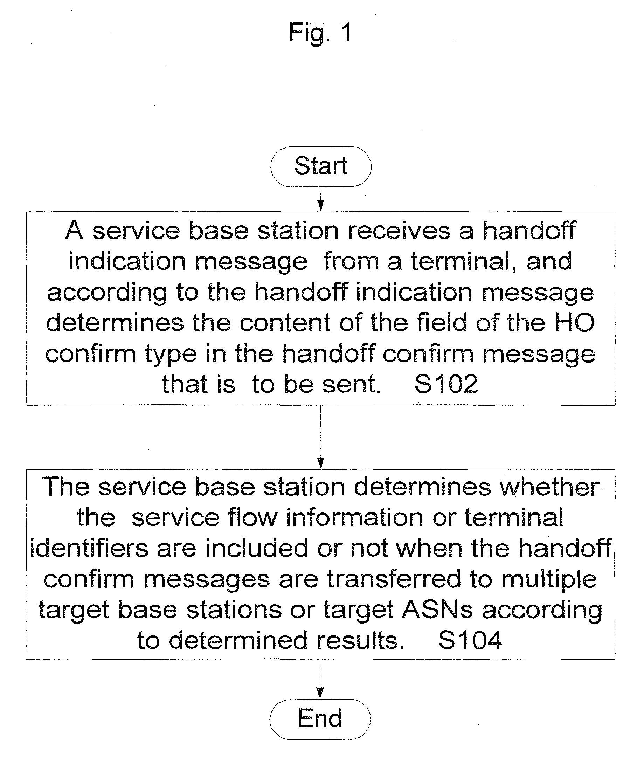

A method for processing handoff confirm messages is provided according to an embodiment of the present invention. Fig. 1 is a flow chart illustrating the method for processing the handoff confirm message according to the embodiment of the present invention. As illustrated in Fig. 1, the method comprises the following steps:
step S102, after receiving a MOB_HO_IND (handoff indication) message sent by a terminal, and according to the information included in the message, a serving base station determines the contents of the HO confirm types in the HO-Cnf messages which are to be sent to multiple target base stations or target ASNs; and
step S104, according to the determined contents of the HO confirm types in the HO-Cnf messages, the serving base station determines whether to include service flow information or terminal identifiers in the HO-Cnf messages when it sends them to multiple target base stations or target ASNs.

The present invention also provides an information transmission method based on the above method for processing the handoff confirm messages, including the following process: after receiving the HO_Cnf message, the target base station or the target ASN performs corresponding operations according to the HO_Cnf message and other information being included.

Further, according to the MOB_HO_IND message sent by the mobile station (MS), if the message indicates that the MS has selected a target base station, according to the message, the serving base station sets the HO confirm type in the HO_Cnf message that is sent to the target base station (or the target ASN) as "Confirm", and the confirmed service flow information is included at the same time. Meanwhile, the serving base station is also required to send the HO_Cnf messages to other unselected target base stations (or the target ASNs), and sets the HO confirm types in the messages as "Cancel", and at least the MS identifiers involved in this handoff cancellation are included at the same time.

If the MOB_HO_IND received by the serving base station indicates that the MS cancels the handoff, then the HO confirm types in the HO_Cnf messages which are sent to all target service stations (or target ASNs) by the serving base station (or the service ASN) are set as "Cancel", and at the same time the MS identifiers corresponding to handoff cancellation are included in the HO_Cnf messages.

If the MOB_HO_IND received by the serving base station indicates that the MS rejects the handoff, then the HO confirm types in the HO_Cnf messages which are sent to all target service stations (or target ASNs) by the serving base station (or the service ASN) are set as "Reject", and at the same time the MS identifiers corresponding to handoff rejection are included in the HO_Cnf messages.

If the serving base station does not receive the MOB_HO_IND message, the HO confirm types in the HO_Cnf messages which are sent to all target base stations (or target ASNs) by the serving base station (or the service ASN) are set as "Unconfirm", and at the same time the confirmed service flow information is included in the HO_Cnf messages.

Further, after receiving the HO_Cnf message sent by the serving base station, the target base station determines the content of the HO confirm type in the message. If the content is "Cancel" or "Reject", the target station releases the resources occupied during the handoff preparation phase according to the MS identifier included in the message.

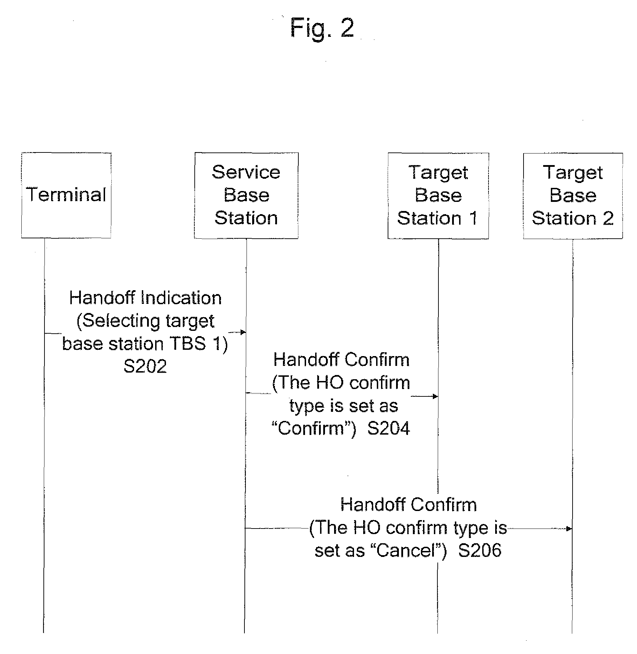

To simplify the figure, two candidate target base stations are selected, as illustrated in Fig. 2, and those are TBS1 and TBS2 respectively. And the above terminal may be a mobile phone in the following embodiments.

Fig. 2 is a flow chart illustrating the method for processing the handoff confirm message according to a preferred embodiment of the present invention, under the condition that a handoff indication message from a mobile phone indicates that a target base station TBS 1 is selected. As illustrated in Fig. 2, the method comprises the following steps:
step S202, a mobile phone sends a handoff indication message to a serving base station (SBS), and the handoff indication message indicates that the MS has successfully selected a target base station TBS 1;
step S204, after receiving the handoff indication message, the serving base station sends a handoff confirm message in which an HO confirm type is set as "Confirm" to the target base station 1 (TBS 1), and at the same time the message includes the confirmed service flow information; and
step S206, after receiving the handoff confirm message, the serving base station sends a handoff confirm message in which the HO confirm type is set as "Cancel" to the target base station TBS 2, and the message includes at least the MS identifier involved in this handoff cancellation.

There is no time order for step S204 and step S206, as long as they follow step S202.

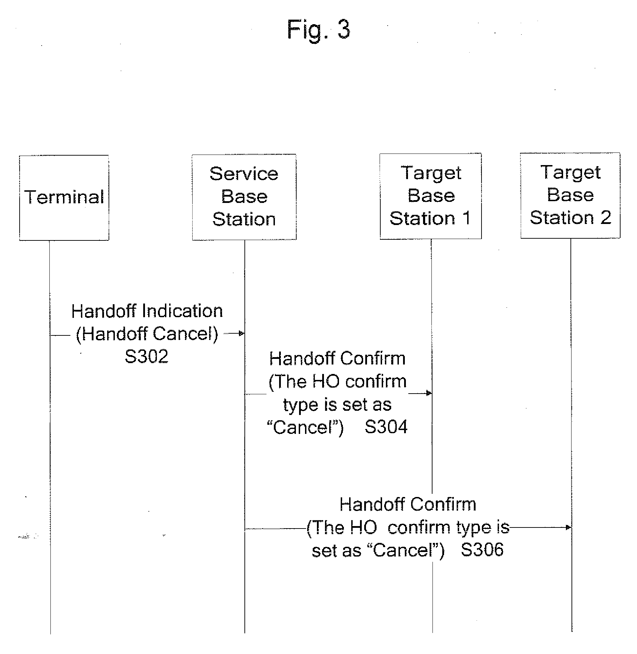

Fig. 3 is a flow chart illustrating the method for processing the handoff confirm message according to a preferred embodiment of the present invention, under the condition that the handoff indication message from a mobile phone indicates that the MS cancels the handoff. As illustrated in Fig. 3, the method comprises the following steps:
step S302, a mobile phone sends a handoff indication message to a serving base station, and the handoff indication message indicates that the MS cancels this handoff;
step S304, after receiving the handoff indication message, the serving base station sends a handoff confirm message in which the HO confirm type is set as "Cancel" to a target base station TBS 1, and the message includes at least the MS identifier involved in this handoff cancellation; and
step S306, after receiving the handoff indication message, the serving base station sends a handoff confirm message in which the HO confirm type is set as "Cancel" to the target base station TBS 2, and the message includes at least the MS identifier involved in this handoff cancellation.

There is no time order for step S304 and step S306, as long as they follow step S302.

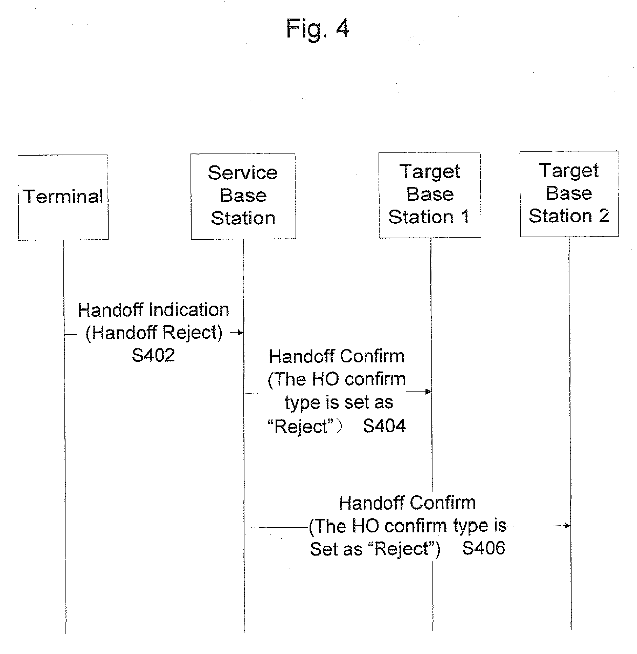

Fig. 4 is a flow chart illustrating the method for processing the handoff confirm message according to a preferred embodiment of the present invention, under the condition that the handoff indication message from a mobile phone indicates that the MS rejects the handoff. As illustrated in Fig. 4, the method comprises the following steps:
step S402, a mobile phone sends a handoff indication message to a serving base station, and the handoff indication message indicates that the MS rejects this handoff;
step S404, after receiving the handoff indication message, the serving base station sends a handoff confirm message in which the HO confirm type is set as "Reject" to a target base station TBS 1, and the message includes at least the MS identifier involved in this handoff rejection; and
step S406, after receiving the handoff indication message, the serving base station sends a handoff confirm message in which the OH confirm type is set as "Reject" to the target base station TBS 2, and the message includes at least the MS identifier involved in this handoff rejection.

There is no time order for step S404 and step S406, as long as they follow step S402.

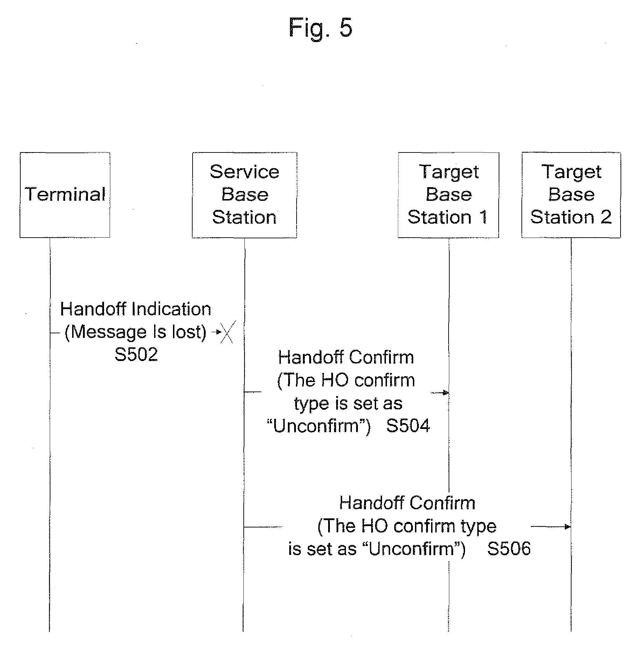

Fig. 5 is a flow chart illustrating the method processing for the handoff confirm message according to a preferred embodiment of the present invention, under the condition that the handoff indication message from a mobile phone is lost. As illustrated in Fig. 5, the method comprises the following steps:
step S502, a mobile phone sends a handoff indication message to a serving base station, and the handoff indication message is lost in the air;
step S504, if the timer that the serving base station waiting for a handoff indication message is overtime and the serving base station has not received the handoff indication message, the serving base station then sends a handoff confirm message in which the HO confirm type is set as "Unconfirm" to a target base station TBS 1. As the terminal may successfully access one target base station, the message at the same time includes the confirmed service flow information; and
step S506, if the timer that the serving base station waiting for a handoff indication message is overtime and the serving base station has not received the handoff indication message, the serving base station sends a handoff confirm message in which the HO confirm type is set as "Unconfirm" to the target base station TBS 2, and the message includes the confirmed service flow information at the same time.

There is no time order for step S504 and step S 506, as long as they follow step S502.

According to another embodiment of the present invention, an optimizing method for a handoff flow is provided, including the following processes: according to possible circumstances in the handoff flow, a serving base station sends different types of handoff confirm messages to a target base station: a confirmed-handoff confirm message, an unconfirmed-handoff confirm message, a cancelled-handoff confirm message, and a rejected-handoff confirm message; thus it is necessary to include fields related to the service flows in the confirmed-handoff confirm message and the unconfirmed-handoff confirm message; and it is required to include at least the corresponding terminal identifiers in the cancelled-handoff confirm message and the rejected-handoff confirm message.

Further, according to a MOB_HO_IND message sent by a MS, if the message indicates that the MS has selected a target base station, the serving base station sends the confirmed-handoff confirm message to the target base station (or the target ASN), and the message includes the confirmed service flow information at the same time. Meanwhile, the serving base station sends the cancelled-handoff confirm message to other unselected target base stations (or target ASNs), and the messages include at least the MS identifiers which are corresponding to the handoff cancellation at the same time.

If the MOB_HO_IND received by the serving base station indicates that the MS cancels this handoff, then the serving base station (or the service ASN) sends the cancelled-handoff confirm messages to all target base stations (or target ASNs). Meanwhile the messages include at least the MS identifiers which are corresponding to the handoff cancellation.

If the MOB_HO_IND received by the serving base station indicates that the MS rejects this handoff, then the serving base station (or the service ASN) sends the rejected-handoff confirm messages to all target base stations (or target ASNs), meanwhile the messages include the MS identifiers corresponding to the handoff rejection.

If the serving base station does not receive the MOB_HO_IND message, then the serving base station (or the service ASN) sends the unconfirmed-handoff confirm messages to all target base stations (or target ASNs), meanwhile the messages include the confirmed service flow information.

According to the optimizing method for a handoff flow of the present invention, in the same control flow, the included redundant information is greatly reduced by the handoff among different branches according to different message contents, and thus the transmission efficiency of link control information and the processing efficiency of a receiving end are improved remarkably.

The present invention also provides an information transmission method based on the above method for processing handoff confirm message. The method comprises the following process: after receiving the handoff confirm message, the target base station or the target ASN performs corresponding operations according to the handoff confirm message.

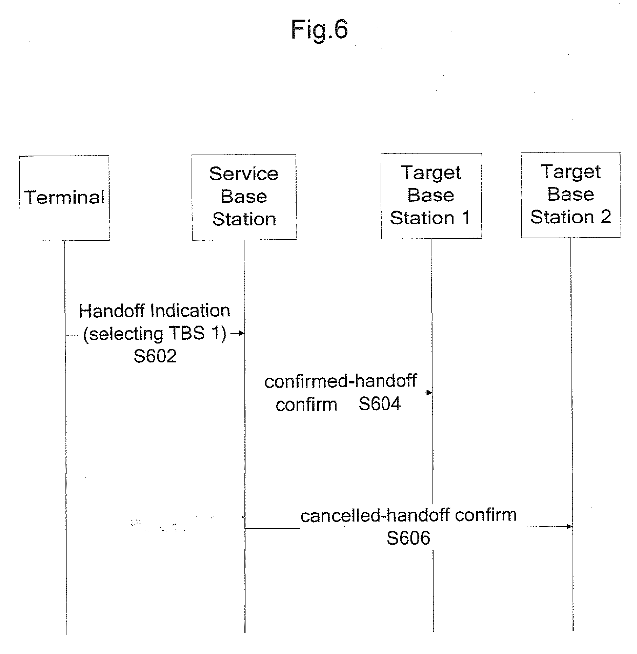

Fig. 6 is a flow chart illustrating the method for processing the handoff confirm message according to a preferred embodiment of the present invention, under the condition that a handoff indication message from a mobile phone indicates that a target base station TBS 1 is selected. As illustrated in Fig. 6, the method comprises the following steps:
step S602, a mobile phone sends a handoff indication message to a serving base station, and the handoff indication message indicates that the MS has successfully selected a target base station TBS 1;
step S604, after receiving the handoff indication message, the serving base station sends a confirmed-handoff confirm message to the selected target base station TBS 1, and the message includes the confirmed service flow information at the same time; and
step S606, after receiving the handoff indication message, the serving base station sends a cancelled-handoff confirm message to the unselected target base station TBS 2, and the message includes at least the MS identifier involved in this handoff cancellation.

There is no time order for step S604 and step S606, as long as they follow step S602.

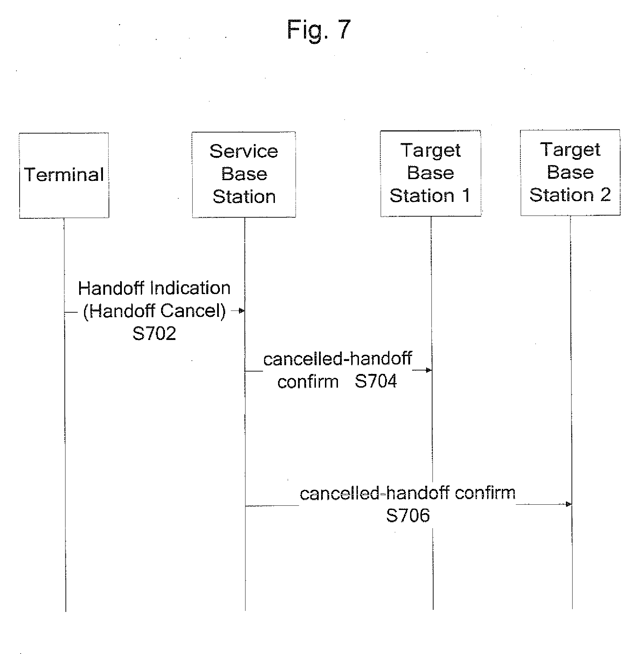

Fig. 7 is a flow chart illustrating the method for processing the handoff confirm message according to another preferred embodiment of the present invention, under the condition that a handoff indication message from a mobile phone indicates that the MS cancels this handoff. As illustrated in Fig. 7, the method comprises the following steps:
step S702, a mobile phone sends a handoff indication message to a serving base station, and the handoff indication message indicates that the MS cancels this handoff;
step S704, after receiving the handoff indication message, the serving base station sends a cancelled-handoff confirm message to the target base station TBS 1, and the message includes at least the MS identifier involved in this handoff cancellation; and
step S706, after receiving the handoff indication message, the serving base station sends a cancelled-handoff confirm message to the target base station TBS 2, and the message includes at least the MS identifier involved in this handoff cancellation.

There is no time order for step S704 and step S706, as long as they follow step S702.

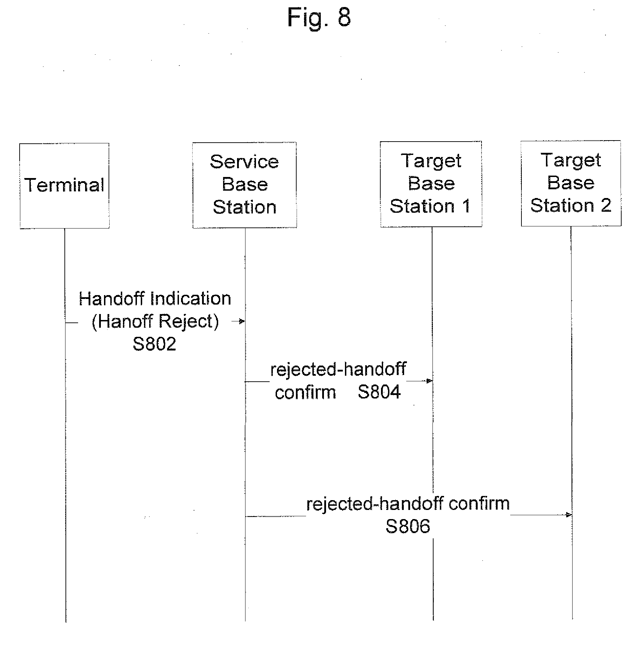

Fig. 8 is a flow chart illustrating the method for processing the handoff confirm message according to another preferred embodiment of the present invention, in which a handoff indication message from a mobile phone indicates that the MS rejects the handoff. As illustrated in Fig. 8, this method comprises the following steps:
step S802, a mobile phone sends a handoff indication message to a serving base station, and the handoff indication message indicates that the MS rejects this handoff;
step S804, after receiving the handoff indication message, the serving base station sends a rejected-handoff confirm message to the target base station TBS 1, and the message includes at least the MS identifier involved in this handoff rejection; and
step S806, after receiving the handoff indication message, the serving base station sends a rejected-handoff confirm message to the target base station TBS 2, and the message includes at least the MS identifier involved in this handoff rejection.

There is no time order for step S804 and step S806, as long as they follow step S802.

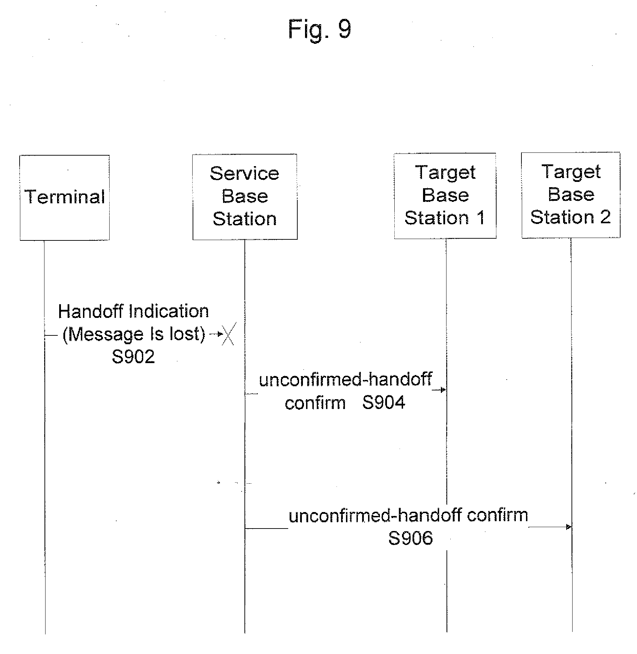

Fig. 9 is a flow chart illustrating the method for processing the handoff confirm message according to another preferred embodiment of the present invention, under the condition that a handoff indication message from a mobile phone is lost. As illustrated in Fig. 9, the method comprises the following steps:
step S902, a mobile phone sends a handoff indication message to a serving base station SBS, and the handoff indication message is lost in the air;
step S904, if the timer that the serving base station waiting for a handoff indication message is overtime and the serving base station has not received the handoff indication message, the serving base station sends an unconfirmed-handoff confirm message to the target base station TBS 1, and the message includes the confirmed service flow information at the same time; and
step S906, if the timer that the serving base station waiting for a handoff indication message is overtime and the serving base station has not received the handoff indication message, the serving base station sends an unconfirmed-handoff confirm message to the target base station TBS 2, and the message includes the confirmed service flow information at the same time.

There is no time order for step S904 and step S906, as long as they follow step S902.

The use of the HO-Cnf messages in the current protocol can be optimized by the method for processing the handoff confirm message of the present invention, which greatly reduce the expense in message transmission. As a result, the increasing service flows exist in a terminal, the larger expense can be saved.

The above illustrative examples are just preferred embodiments of the present invention, but are not used to limit the invention. For those skilled in the art, various modifications and changes can be made to the present invention.

## Claims

1. A method for processing handoff confirm messages comprising the following steps:
receiving, by a serving base station, a handoff indication message from a terminal and, and determining, by the serving base station according to the handoff indication message, the content of the field of an HO confirm type in the handoff confirm message which is to be sent (S102); and
determining, by the serving base station according to the content of the field of the HO confirm type, whether to include service flow information in the handoff confirm messages or not when sending them to multiple target base stations or target access service networks (S104),
**characterized in that**,
when the content of the field of the HO confirm type indicates the handover is cancelled or rejected, the service flow information is not included in the handoff confirm message, and a terminal identifier is included in the handoff confirm message.

2. The method for processing handoff confirm messages according to claim 1, wherein,
if the received handoff indication message indicates that the terminal has selected a target base station or a target access service network, then the content of the field of the HO confirm type is set as "Confirm" or "Cancel";
the determining comprises:
sending, by the serving base station, the handoff confirm message in which the content of the field of the HO confirm type is set as "Confirm" to the selected target base station or the selected target access service network, wherein the service flow information is included in the handoff confirm message; and
sending, by the serving base station, the handoff confirm message in which the content of the field of the HO confirm type is set as "Cancel" to an unselected target base stations or an unselected target access service networks, wherein the service flow information is not included in the handoff confirm message, and the terminal identifier is included in the handoff confirm message.

3. The method for processing handoff confirm messages according to claim 1, further comprising:
sending, by the serving base station, the handoff confirm messages in which the contents of the fields of the HO confirm types are set as "Unconfirm" to all target base stations or all target access service networks if the handoff indication message is not received, wherein the handoff confirm message includes the service flow information while being sent.

4. The method for processing handoff confirm messages according to any of claims 1 to 3, further comprising:
after receiving the handoff confirm message, if the content of the field of the HO confirm type is set as "Cancel" or "Reject", releasing, by the target base station or the target access service network, resources occupied during a handoff preparation phase according to the terminal identifier.

5. An information transmission based on the method for processing handoff confirm messages according to any of claims 1 to 3, comprising:
after receiving the handoff confirm message, performing, by the target base station or the target access service network, corresponding operations according to the handoff confirm message.

## Patentansprüche

1. Verfahren zum Verarbeiten von Übertragungsbestätigungsnachrichten umfassend die folgenden Schritte:
Empfangen einer Übertragungsanzeigenachricht von einem Endgerät durch eine Ausgabebasisstation und Bestimmen des Inhalts des Datenfelds einer HO-Bestätigungsart in der Übertragungsbestätigungsnachricht, welche gesendet werden soll (S102), durch eine Ausgabebasisstation gemäß der Übertragungsanzeigenachricht; und
Bestimmen, durch die Ausgabebasisstation gemäß dem Inhalt des Datenfeldes der HO-Bestätigungsart, ob die Serviceablaufinformation in die Übertragungsbestätigungsnachrichten aufgenommen werden oder nicht, wenn diese an mehrere Zielbasisstationen oder Zielzugangsservicenetzwerke (S104) gesendet werden,
**dadurch gekennzeichnet, dass**
wenn der Inhalt des Datenfeldes der HO-Bestätigungsart anzeigt, dass die Übergabe abgebrochen oder abgewiesen wurde, die Serviceablaufinformation nicht in die Übergabebestätigungsnachricht aufgenommen ist und eine Endgeräterkennung in die Übertragungsbestätigungsnachricht aufgenommen ist.

2. Verfahren zum Verarbeiten von Übertragungsbestätigungsnachrichten nach Anspruch 1, wobei,
wenn die empfangenen Übertragungsanzeigenachricht anzeigt, dass das Endgerät eine Zielbasisstation oder ein Zielzugangsservicenetzwerk ausgewählt hat, der Inhalt des Datenfeldes der HO-Bestätigungsart dann auf "Bestätigen" oder "Abbrechen" gesetzt wird;
die Bestimmung umfasst:
Senden der Übertragungsbestätigungsnachricht durch die Ausgabebasisstation, in welcher der Inhalt des Datenfeldes der HO-Bestätigungsart auf "Bestätigen" an der ausgewählten Zielbasisstation oder dem ausgewählten Zielzugangsservicenetzwerk gesetzt wurde, wobei die Serviceablaufinformation in der Übertragungsbestätigungsnachricht aufgenommen ist; und
Senden der Übertragungsbestätigungsnachricht durch die Ausgabebasisstation, in welcher der Inhalt des Datenfeldes der HO-Übertragungsart auf "Abbrechen" auf einer nicht ausgewählten Zielbasisstation oder einem nicht ausgewählten Zielzugangsservicenetzwerk gesetzt wird, wobei die Serviceablaufinformation nicht in der Übertragungsbestätigungsnachricht aufgenommen ist, und die Endgeräteerkennung in der Übertragungsbestätigungsnachricht aufgenommen ist.

3. Verfahren zum Verarbeiten von Übertragungsbestätigungsnachrichten nach Anspruch 1, weiter umfassend:
Senden der Übertragungsbestätigungsnachrichten durch die Ausgabebasisstation, in welchen die Inhalte der Datenfelder der HO-Bestätigungsarten auf "Nichtbestätigen" bei allen Zielbasisstationen oder allen Zielzugangsservicenetzwerken gesetzt wird, wenn die Übertragungsanzeigenachricht nicht empfangen wird, wobei die Übertragungsbestätigungsnachricht die Serviceablaufinformation beinhaltet, während sie gesendet wird.

4. Verfahren zum Verarbeiten von Übertragungsbestätigungsnachrichten nach einem der Ansprüche 1 bis 3, weiter umfassend:
nach dem Empfangen der Übertragungsbestätigungsnachricht, wenn der Inhalt des Datenfelds der HO-Bestätigungsart auf "Abbrechen" oder "Abweisen" gesetzt ist, Freigeben von Ressourcen durch die Zielbasisstation oder das Zielzugangsservicenetzwerk, welche während einer Übertragungsvorbereitungsphase gemäß der Endgeräteerkennung belegt waren.

5. Eine Informationsübertragung basierend auf dem Verfahren zum Verarbeiten von Übertragungsbestätigungsnachrichten nach einem der Ansprüche 1 bis 3, umfassend:
nach dem Empfangen der Übertragungsbestätigungsnachricht, Ausführen zugehöriger Verfahren gemäß der Übertragungsbestätigungsnachricht durch die Zielbasisstation oder das Zielzugangsservicenetzwerk.

## Revendications

1. Procédé pour traiter des messages de confirmation de transfert comprenant les étapes suivantes :
la réception, par une station de base de desserte, d'un message d'indication de transfert en provenance d'un terminal, et la détermination, par la station de base de desserte selon le message d'indication de transfert, du contenu du champ d'un type confirmation HO dans le message de confirmation de transfert qui doit être envoyé (S102) ; et
la détermination, par la station de base de desserte selon le contenu du champ du type confirmation HO, d'inclure ou non des informations de flux de service dans les messages de confirmation de transfert lors de leur envoi à de multiples stations de base cibles ou réseaux de service d'accès cibles (S104),
**caractérisé en ce que**,
lorsque le contenu du champ du type confirmation HO indique que le transfert est annulé ou rejeté, les informations de flux de service ne sont pas incluses dans le message de confirmation de transfert, et un identificateur de terminal est inclus dans le message de confirmation de transfert.

2. Procédé pour traiter des messages de confirmation de transfert selon la revendication 1, dans lequel,
si le message d'indication de transfert reçu indique que le terminal a sélectionné une station de base cible ou un réseau de service d'accès cible, alors le contenu du champ du type confirmation HO est établi comme « confirmer » ou « annuler » ;
la détermination comprend :
l'envoi, par la station de base de desserte, du message de confirmation de transfert dans lequel le contenu du champ du type confirmation HO est établi comme « confirmer » à la station de base cible sélectionnée ou au réseau de service d'accès cible sélectionné, dans lequel les informations de flux de service sont incluses dans le message de confirmation de transfert ; et
l'envoi, par la station de base de desserte, du message de confirmation de transfert dans lequel le contenu du champ du type confirmation HO est établi comme « annuler » à une station de base cible non sélectionnée ou un réseau de service d'accès cible non sélectionné, dans lequel les informations de flux de service ne sont pas incluses dans le message de confirmation de transfert, et l'identificateur de terminal est inclus dans le message de confirmation de transfert.

3. Procédé pour traiter des messages de confirmation de transfert selon la revendication 1, comprenant en outre :
l'envoi, par la station de base de desserte, les messages de confirmation de transfert dans lesquels les contenus des champs des types confirmation HO sont établis comme « ne pas confirmer » à toutes les station de base cibles ou tous les réseaux de service d'accès cibles si le message d'indication de transfert n'est pas reçu, dans lequel le message de confirmation de transfert inclut les informations de flux de service tout en étant envoyé.

4. Procédé pour traiter des messages de confirmation de transfert selon l'une quelconque des revendications 1 à 3, comprenant en outre :
après la réception du message de confirmation de transfert, si le contenu du champ du type confirmation HO est établi comme « annuler » ou « rejeter », la libération, par la station de base cible ou le réseau de service d'accès cible, de ressources occupées au cours d'une phase de préparation de transfert selon l'identificateur de terminal.

5. Transmission d'informations basée sur le procédé pour traiter des messages de confirmation de transfert selon l'une quelconque des revendications 1 à 3, comprenant :
après la réception du message de confirmation de transfert, l'exécution, par la station de base cible ou le réseau de service d'accès cible, d'opérations correspondantes selon le message de confirmation de transfert.
